# DEMANDE DE BREVET EUROPEEN

(11) **EP 1 473 884 A1**
(43) Date de publication de la demande: **03.11.2004**
(21) Numéro de dépôt: 04300110.6
(22) Date de dépôt: 04.03.2004
(51) Int. Cl.: H04L 12/413, H04L 12/44, G06F 13/40, B60R 16/02

(54) **Réseau de communication sécurisé comportant au moins un coupleur actif**

(30) Priorité: 06.03.2003 FR 0302779
(71) Demandeur: Renault s.a.s., 92100 Boulogne Billancourt (FR)
(72) Inventeur: Rocher, Jean Michel, 91620 Nozay (FR)

(57) **Abrégé**

Réseau de communication sécurisé comportant au moins un coupleur actif (1) relié électriquement à plusieurs équipements (2, 3, 4, 5) par plusieurs lignes de communication (6, 7, 8, 9) disposées en étoile, le coupleur (1) comprenant une logique de brassage (10) et plusieurs émetteurs-récepteurs de ligne (12, 13, 14), chacun de ces émetteurs-récepteurs étant relié à l'une desdites lignes, le coupleur (1) étant en outre relié à une alimentation électrique (15), chaque équipement (3, 4, 5) comportant un contrôleur de communication (16, 17, 18, 19) relié à un émetteur-récepteur de ligne (21, 22, 23), caractérisé en ce que la logique de brassage (10) est directement reliée au contrôleur de communication (16) d'au moins l'un (2) desdits équipements, la liaison entre ladite logique de brassage (10) et ledit contrôleur de communication (16) étant dépourvue d'émetteur-récepteur de ligne.

## Description

La présente invention concerne un réseau de communication et en particulier un réseau de communication sécurisé comportant au moins un coupleur actif sécurisé comportant au moins un coupleur actif relié électriquement à plusieurs équipements par plusieurs lignes de communication disposées en étoile.

Un tel réseau est proposé dans le document "FlexRays Electrical Physical Layer", *B. Elend,* XP-002260988 et dans le document "Anforderungen an ein zukänftiges Bussystem für fehlertolerante Anwendungen aus Sicht Kfz-Hersteller", *R. Belschner et al.,* XP-002260989,

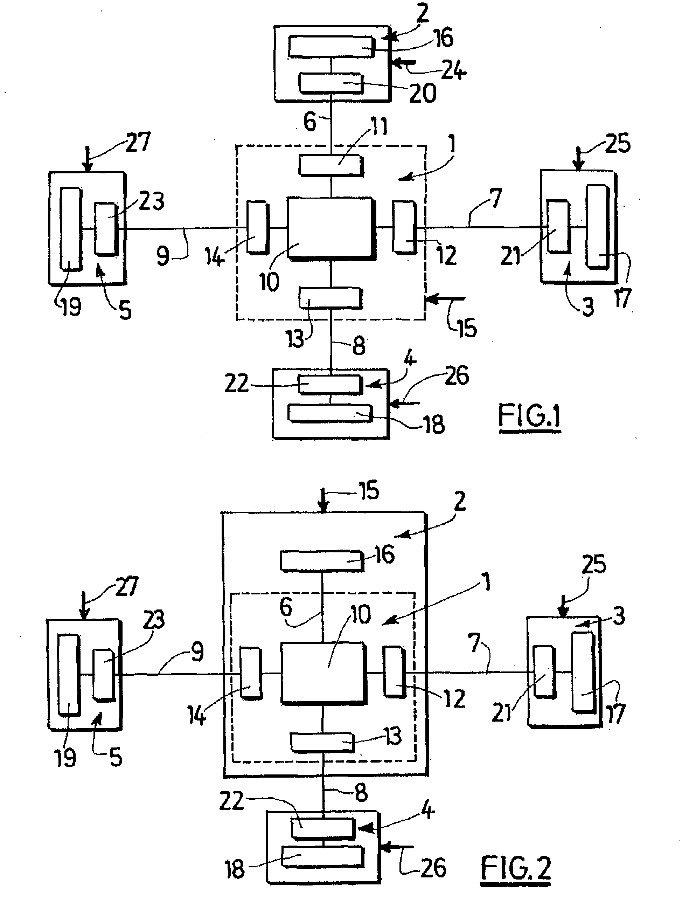

Un coupleur actif est représenté schématiquement sur la figure 1. Cette figure représente schématiquement un coupleur actif 1 relié électriquement à plusieurs équipements 2, 3, 4, 5 par plusieurs lignes de communication 6, 7, 8, 9 disposées en étoile. Le coupleur 1 comprend une logique de brassage 10 et plusieurs émetteurs-récepteurs de ligne 11, 12, 13, 14. Chaque émetteur-récepteur est relié à l'une desdites lignes 6, 7, 8, 9. Le coupleur 1 est en outre relié à une alimentation électrique 15. Chaque équipement 2, 3, 4, 5 comporte un contrôleur de communication 16, 17, 18, 19 relié à un émetteur-récepteur de ligne 20, 21, 22, 23 qui est lui-même relié à la ligne de communication 6, 7, 8, 9 correspondante et à un émetteur-récepteur 11, 12, 13, 14 du coupleur 1. De plus, chaque équipement 2, 3, 4, 5 est relié à une alimentation électrique individuelle 24, 25, 26, 27.

Dans ces coupleurs actifs en étoile, la logique de brassage 10 a pour fonction de recopier les trames émises par un équipement 2, 3, 4, 5 raccordé à l'une des lignes ou branches de l'étoile, sur les autres branches en empêchant les échos.

Le contrôleur de communication 16, 17, 18, 19 gère pour chaque équipement 2, 3, 4, 5 le protocole, la mise en forme des trames en émission et le décodage en réception des trames de communication.

Les coupleurs actifs du type connu ci-dessus permettent d'obtenir une indépendance entre les composants du système dans les applications critiques pour assurer la sécurité, notamment pour les équipements électriques de véhicules terrestres à moteur.

Le but de la présente invention est de simplifier les réseaux de communication connus, en réduisant le nombre d'émetteurs-récepteurs et d'alimentations individuelles pour réduire le coût et améliorer la fiabilité.

Suivant l'invention, le réseau de communication sécurisé comportant au moins un coupleur actif relié électriquement à plusieurs équipements par plusieurs lignes de communication disposées en étoile, le coupleur comprenant une logique de brassage et étant relié à une alimentation électrique, chaque équipement comportant un contrôleur de communication, est caractérisé en ce que la logique de brassage est directement reliée à au moins un contrôleur de communication de l'un desdits équipements.

De préférence, la logique de brassage est directement reliée à un contrôleur de communication de l'un desdits équipements et les autres équipements sont reliés au coupleur par l'intermédiaire d'un émetteur-récepteur de ligne.

L'invention permet ainsi de supprimer au moins deux émetteurs-récepteurs de ligne, à savoir l'un des émetteurs-récepteurs du coupleur et celui de l'un desdits équipements.

Selon une version préférée de l'invention, le coupleur et ledit équipement sont reliés à une alimentation électrique commune. Cette disposition permet ainsi de supprimer au moins une alimentation, ce qui permet une réduction du coût.

Selon une réalisation avantageuse de l'invention, ledit coupleur et le contrôleur de communication dudit équipement sont intégrés dans ledit équipement, ce qui permet de réduire encore davantage le coût et d'augmenter la fiabilité.

Le coupleur et le contrôleur peuvent être constitués par des composants distincts, ou être constitués par un composant unique intégrant les fonctions coupleur et contrôleur.

D'autres particularités et avantages de l'invention apparaîtront encore dans la description ci-après.

Aux dessins annexés donnés à titre d'exemples non limitatifs :
- la figure 2 est un schéma d'une première version du coupleur actif intégré à l'un des équipements,
- la figure 3 est un schéma d'une seconde version du coupleur actif intégré à plusieurs équipements.

Dans la réalisation de la figure 2, le coupleur actif 1 est comme dans le cas de la figure 1, relié électroniquement à plusieurs équipements 2, 3, 4, 5 par plusieurs lignes de communication 6, 7, 8, 9 disposées en étoile. Le coupleur 1 comprend une logique de brassage 10 et trois émetteurs-récepteurs de ligne 11, 12, 13, chacun de ces émetteurs-récepteurs étant relié à l'une des lignes 7, 8, 9. Comme précédemment, le coupleur est en outre relié à une alimentation électrique 15 et chaque équipement 2, 3, 4, 5 comporte un contrôleur de communication 16, 17, 18, 19.

Le schéma de la figure 2 diffère de celui de la figure 1 du fait que la logique de brassage 10 est directement reliée au contrôleur de communication 16 de l'équipement 2, la liaison 6 entre la logique de brassage 10 et le contrôleur de communication 16 étant dépourvue d'émetteur-récepteur de ligne.

Ainsi, on fait l'économie des deux émetteurs-récepteurs de ligne 11 et 20. On voit également sur le schéma de la figure 2 que le coupleur 1 et l'équipement 2 sont reliés à une alimentation électrique commune 15, c'est-à-dire que l'alimentation 24 de l'équipement 2 est supprimée.

Par ailleurs, le coupleur 1 et le contrôleur de communication 16 de l'équipement 2 sont intégrés dans cet équipement.

Le coupleur 1 et le contrôleur 16 peuvent être constitués par des composants distincts, ou constitués un composant unique intégrant les fonctions coupleur et contrôleur.

Bien entendu, le réseau de communication peut comprendre plusieurs coupleurs actifs.

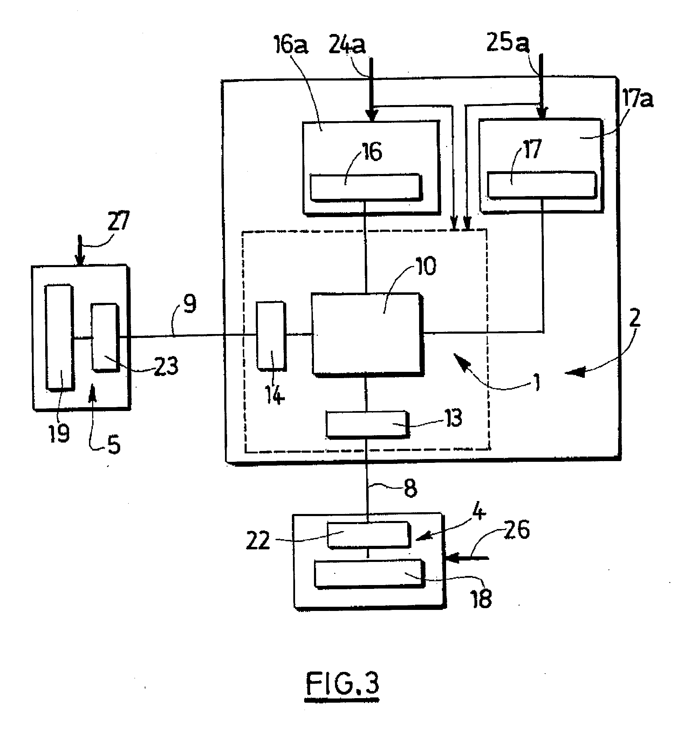

Dans l'exemple de la figure 3, la logique de brassage 10 du coupleur 1 est directement reliée à deux contrôleurs de communication 16, 17. Les deux contrôleurs 16, 17 et le coupleur 1 sont intégrés dans un même équipement 2.

Les deux contrôleurs 16, 17 appartiennent à des circuits 16a, 17a ayant des fonctions différentes ayant des alimentations séparées 24a, 25a reliées au coupleur 1 pour alimenter celui-ci.

Cette application utilise un bus du type TTP ou flexray.

Dans le cas du schéma de la figure 3, le gain sur le nombre de composants émetteurs-récepteurs est de huit composants.

Le réseau de communication que l'on vient de décrire peut s'appliquer notamment à la réalisation de l'architecture électronique et informatique d'un véhicule terrestre à moteur tel qu'une automobile.

Dans une telle application, l'invention permet de réduire les coûts de la fabrication du réseau de communication tout en améliorant la fiabilité de celui-ci.

## Revendications

1. Réseau de communication sécurisé comportant au moins un coupleur actif (1) relié électriquement à plusieurs équipements (2, 3, 4, 5) par plusieurs lignes de communication (6, 7, 8, 9) disposées en étoile, le coupleur (1) comprenant une logique de brassage (10) et étant relié à une alimentation électrique (15), chaque équipement (2, 3, 4, 5) comportant un contrôleur de communication (16, 17, 18, 19), **caractérisé en ce que** la logique de brassage (10) est directement reliée à au moins un contrôleur de communication (16) de l'un (2) desdits équipements.

2. Réseau de communication selon la revendication 1, **caractérisé en ce que** la logique de brassage (10) est directement reliée à un contrôleur de communication (16) de l'un (2) desdits équipements et **en ce que** les autres équipements (3, 4, 5) sont reliés au coupleur (1) par l'intermédiaire d'un émetteur-récepteur de ligne.

3. Réseau de communication selon la revendication 1, **caractérisé en ce que** le coupleur (1) et ledit équipement (2) sont reliés à une alimentation électrique commune (15).

4. Réseau de communication selon l'une des revendications 1 à 3, **caractérisé en ce que** ledit coupleur (1) et le contrôleur de communication (16) dudit équipement (2) sont intégrés dans ledit équipement.

5. Réseau de communication selon la revendication 4, **caractérisé en ce que** ledit coupleur (1) et ledit contrôleur (16) sont constitués par des composants distincts.

6. Réseau de communication selon la revendication 4, **caractérisé en ce que** ledit coupleur (1) et ledit contrôleur (16) constituent un composant unique intégrant les fonctions coupleur et contrôleur.

7. Réseau de communication selon l'une des revendications 1 à 6, **caractérisé en ce qu'**il comprend plusieurs coupleurs actifs.

8. Réseau de communication selon l'une des revendications 1 à 7, **caractérisé en ce que** la logique de brassage (10) de l'un des coupleurs (1) est directement reliée à deux contrôleurs de communication (16, 17).

9. Réseau de communication selon la revendication 8, **caractérisé en ce que** les deux contrôleurs (16, 17) et le coupleur (1) sont intégrés dans un même équipement (2).

10. Application du réseau de communication selon l'une des revendications 1 à 9 à un véhicule.
